# EUROPEAN PATENT APPLICATION

(11) **EP 4 331 384 A1**
(43) Date of publication of application: **06.03.2024**
(21) Application number: 22192847.6
(22) Date of filing: 30.08.2022
(51) Int. Cl.: A23L 11/50, A23L 11/65, A23L 27/20, A23L 27/00, A23L 33/105, A61K 36/48

(54) **SOY-BASED FOOD, PREPARATION PROCESS AND USE**

(71) Applicant: Takasago International Corporation, Tokyo 144-8721 (JP)
(72) Inventor: Looft, Dr. Jan, 53909 Zülpich (DE); Zenner, Laura, 53909 Zülpich (DE); Schaefer, Thomas, 53909 Zülpich (DE)
(74) Representative: Hoffmann Eitle

(57) **Abstract**

The present invention relates to a process for the preparation of a soy-based food with increased isoflavone level and good taste and flavor, comprising the steps of preparing an aqueous soy dispersion, optionally heating the soy dispersion, subjecting the soy dispersion to a deglycosylation treatment and adding a flavor system for reducing the off-flavor caused by the deglycosylation treatment. Other aspects of the invention relate to a thus-obtained soy-based food, and to the use of the flavor system for reducing the off-flavor of soy-based food subjected to a deglycosylation treatment.

## Description

### Field of the Invention

The present invention relates to a process for the preparation of a soy-based food with an increased isoflavone level and good flavor and taste involving the enzymatic deglycosylation of the soy isoflavone β-glucosides. Further aspects of the invention relate to a thus-obtainable soy-based food and the use thereof for soothing symptoms of menopause.

### Technical Background

Women in the age around of 50 years are experiencing change in their individual hormone composition, mainly estrogen and gestagen. Menopause, also known as the climacteric, is the time in women's lives when menstrual periods stop permanently, and they are no longer able to bear children. Menopause usually occurs between the age of 48 and 52. It may be defined by a decrease in hormone production by the ovaries.

In the years before menopause, a woman's period typically becomes irregular, which means that periods may be longer or shorter in duration or be lighter or heavier in the amount of flow. During this time, women often experience hot flashes; these typically last from 30 seconds to ten minutes and may be associated with shivering, sweating, and reddening of the skin. The occurrence of hot flashes can last from four to five years. Other symptoms may include vaginal dryness, trouble sleeping, and mood changes. The severity of symptoms varies between women. While menopause is often thought to be linked to an increase in heart disease, this primarily occurs due to increasing age and does not have a direct relationship with menopause. In some women, symptoms that were caused by phenomena like endometriosis or painful periods will be reduced after menopause.

Options for the treatment of menopausal symptoms are reviewed by Hill et al., Am Fam Physician 94(11), 884-889 (2016). One possibility for the treatment are hormone substitution therapies with estrogen analogues. Another possibility, however, is to relieve symptoms by the use of natural food alternatives. Many plant-based food naturally contains substances, which show possibility to interact as estrogenic compounds - so called phytohormones. These materials offer the possibility to compose special diets which relieve climacteric symptoms without using synthetic pharmaceutical APIs.

As reviewed by Chen et al., Nutrients 11(11), 2649 (2019), isoflavonoids such as genistein, daidzein and glycitein are one important class of such phytohormones useful as an alternative treatment for menopausal symptoms.

Soy naturally contains a high proportion of the corresponding β-glucosides genistin, daidzin and glycitin. However, only the aglycones are phytohormons and show estrogenic activity, not the β-glucosides. During food processing only a small part of glucosides is released to agylcones - and in individual gut digestion release and intake of aglycones is also low, depending on individual differences of each human. Accordingly, for the alleviation of menopausal symptoms, it is desirable to provide soy-based food with increased content of the aglycones.

US 2019/090502 describes the preparation of a soymilk high in deglycosylated soy isoflavones, which includes a necessary media milling step after treatment with β-glucosidase.

KR101949990 describes a method to produce a soy milk beverage which is said to help against osteoporosis. The method involves the use of special β-glucosidases enzymes to release soy isoflavone aglycones by special β-glucosidases.

CN 109998097 describes a healthcare product, prepared as a capsule, for relieving climacteric symptoms. The healthcare product is formed by compounding main ingredients consisting of ginseng components, soy isoflavones, pueraria isoflavones and caragana extracts. As auxiliary materials, vitamins B and D and propolis are used.

### Problems addressed by the invention

As regards the type of foodstuffs, the cited prior art focusses on soy beverages such as soymilk, but there is also a general demand for a wider variety of products, including spoonable food such as yogurt analogue soy products and semi-solid or solid products, including tofu or soy-based analogs of dairy products such as soy cheese or soy ice cream, and textured soy products useful as meat analogue.

For the preparation, the cited prior art focusses on the use of specific enzyme preparations, but there is also need for further fermentation means, which can be readily incorporated into the various methods of soy processing.

Furthermore, fermented soy products often tend to develop astringent, earthy or bitter off-tastes, which are unfavorable for the consumers. Therefore, there is also need for methods for reducing or eliminating such off-tastes.

The present invention therefore addresses the problem of providing a soy product with an increased isoflavone level and with good taste and flavor.

The present inventors have conducted extensive research in order to address this problem, and surprisingly found that:
- In liquid soy preparations (like soymilk analogues) the level of free aglycones (Genistein, Daidzein) can be easily increased by action of β-glucosidases.
- Surprisingly, these enzymes do not only act on the simple glucosides, but also on their malonated and acetylated analogues.
- Surprisingly, as an alternative to the isolated β-glucosidases, homogenized pre-germinated soybeans and ground, fresh almonds likewise can be used to transform the glucosides of soy isoflavones into their aglycones.
- The liquid soy products from the above-mentioned processes can be used for further fermentation to produce yoghurt analogue soy products which are spoonable.
- The flavor profile can be improved and the development of the off-flavor reduced by a specific flavoring system.

### Summary of the invention

As a solution to the above-described problems, the present invention provides a process for the preparation of a soy-based food, comprising the steps of:
- preparing an aqueous soy dispersion;
- optionally heating the soy dispersion;
- subjecting the soy dispersion to a deglycosylation treatment, to deglycosylate the isoflavone β-glucosides comprised in the soy dispersion and obtain the corresponding isoflavone aglycones; and
- adding a flavor system for reducing the off-flavor caused by the deglycosylation treatment.

A further aspect of the present invention relates to a thus-obtained soy-based food, which is useful for the alleviation of menopause symptoms.

### Brief description of the Drawing

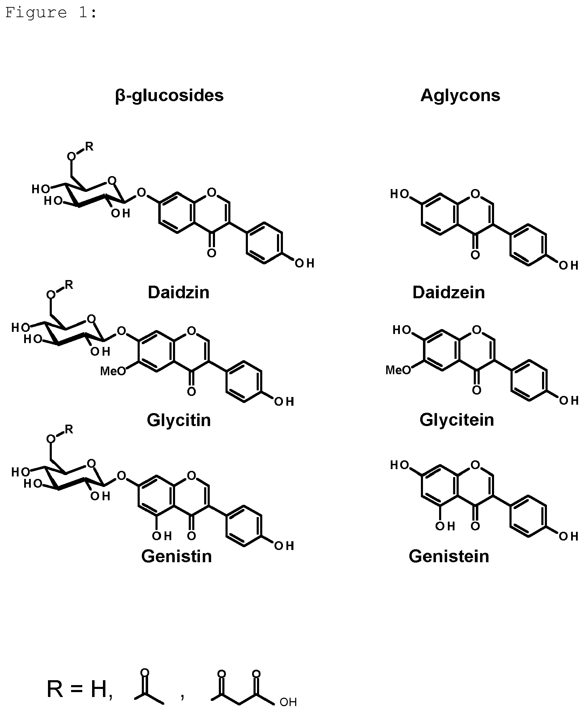

Figure 1 shows typical isoflavone β-glucosides and acetyl or malonyl esters thereof, as found in soybeans and soy products (left-hand) as well as the respective free isoflavone aglycones obtained by the process of the present invention.

### Detailed description of the invention

The embodiments of the present invention will now be described in greater detail.

### Preparation of the aqueous soy dispersion

The process of the present invention comprises the preparation of an aqueous soy dispersion. The respective preparation methods are not particularly limited, and any conventional method may be used for this purpose.

According to one embodiment, the dry whole soybeans may be used as a starting material. The soybeans firstly are soaked in water or aqueous bicarbonate solution. Optionally, the soybeans may be pre-germinated. The soaked beans are suitably mixed with water or aqueous bicarbonate and then milled to produce a soybean slurry.

Alternatively, the soybean slurry may also be prepared by mixing the water or aqueous bicarbonate with soy flour, which is available from commercial sources.

If necessary, further water may be added in order to adjust the solid content of the slurry. Suitably, the final solid content is in the range of 5 to 25 wt.%, preferably 10-20 wt.%, typically about 12 wt.%.

For sterilization, elimination of malodor and also for improving the accessibility of the isoflavone β-glucosides to the subsequent fermentation, the slurry may be heated, preferably to a temperature of at least 80°C, or boiled before further processing. The heating or boiling also deactivates trypsin inhibitors to improve digestibility.

If necessary, the slurry may be neutralized, and the pH may be suitably adjusted, and then can be directly used as the aqueous soy dispersion for the subsequent deglycosylation step.

If desired, the slurry may be homogenized, and the insoluble solids may be removed by filtration to obtain an aqueous emulsion (soy milk) with dispersed soy protein, soy fat and carbohydrates, both in the form of dispersed starch and dissolved sugar, as the main constituents. The thus-obtained emulsion likewise can be used for the deglycosylation treatment.

In addition, the soy dispersion may be supplemented with further ingredients such as glucose or other sugars, which may serve as additional substrates, e.g., for the lactic acid bacteria in case of performing an additional lactic acid fermentation step and/or if the deglycosylation treatment is performed with a microorganism.

### Deglycosylation treatment

As shown in Figure 1, soybeans naturally comprise isoflavonoid β-glucosides such as genistin, daidzin or glycitin, as well as derivatives which are further acylated at the 6'-O-atom of the glucose, in particular the acetyl or malonyl. By the deglycosylation treatment of the present invention, these β-glucosides are converted into the corresponding physiologically active aglycones, such as genistein, daidzein and glycitein, respectively.

In the method of the present invention, the deglycosylation can be achieved by adding a β-glucosidase enzyme or an inoculum comprising a microorganism or other biological material with β-glucosidase activity to the soy dispersion. The resulting mixture is then incubated for a suitable time at a suitable temperature, to deglycosylate the isoflavone β-glucosides comprised in the soy dispersion and obtain the corresponding isoflavone aglycones.

As the β-glucosidase enzyme, commercial β-glucosidases or enzyme preparations with β-glucosidase activity may be used. Suitable examples include naringinase (e.g., Amano^{™} D, available from Amano Enzyme Inc.), Aromase^{™} (available from Amano Enzyme Inc.) or β-Glucosidase from almonds (available from Merck KGaA, CAS-9001-22-3).

The applicable enzyme concentration, pH value and fermentation temperatures may depend on the exact type and origin of the enzyme, and can be suitably chosen by the skilled person. In case of commercial enzyme preparations, the conditions may also be specified by the manufacturer.

The microorganism is not specifically limited, as long as it provides β-glucosidase activity. Depending on the type of microorganism, supplementation of the soy dispersion with an additional fermentation substrate such as glucose may be required. A preferred example is the use of Bacillus subtilis natto in combination with glucose supplementation.

Suitable fermentation conditions may depend on the type of microorganism and typically include temperatures of 20-50°C, preferably 30-40°C and incubation times of 8 to 48 h, preferably 20-28 h.

Surprisingly, it was found that plant materials with β-glucosidase activity likewise are useful for the deglycosylation treatment in accordance with the present invention. Milled, pre-germinated soybeans and milled sweet almonds are preferred examples for the plant material.

The progress of the conversion of the β-glucoside into the aglycone can be suitably monitored, e.g., by means of HPLC. To deactivate the enzyme or the microorganism after completion of the deglycosylation treatment, the soy slurry or extract again may be heated to a temperature of at least 80°C.

### Flavoring System

The above-described deglycosylation treatments do not only increase the level of the isoflavonoid aglycones, but they also lead to a change in the flavor-profiles and the taste profiles of these food materials: an earthy flavor is developed, and additional astringent taste characteristics develop. This makes such materials unfavorable for consumers.

The present invention therefore uses a flavoring system for reducing or eliminating these additional off-flavors. The flavoring system preferably comprises aromatic aldehydes and/or pyrazines as flavoring components.

Examples for aromatic aldehydes useful for reducing the off-flavors include vanillin, eugenol, heliotropin and anisaldehyde. The present inventors found that among those, anisaldehyde and heliotropin are particularly effective. Anisaldehyde showed activity already at concentrations of 0.1 ppm and heliotropin showed already activity at concentrations of 0.4 ppm. Eugenol and Vanillin were less active.

Examples for the pyrazines include dimethyl- and trimethylpyrazines, which likewise can effectively reduce the sensorial recognition of the green/musty off-note. Especially 2,5-dimethylpyrazine and 2,3,5-trimethylpyrazine are active at low concentrations. 2,5-dimethylpyrazine showed activity already at concentrations of 0.1 ppm, 2,3,5-trimethylpyrazine already at concentrations of 0.5 ppm.

Among the aromatic aldehydes, vanillin is a usual main constituent of vanilla flavor, and anisaldehyde and heliotropin contribute well into vanilla flavorings. Therefore, in one embodiment, the flavoring system of the present invention is a vanilla flavor composition, which preferably further includes one or both of anisaldehyde and heliotropin.

Pyrazines are generally useful for chocolate flavor compositions; accordingly, in another embodiment, the flavoring system of the present invention is a chocolate flavor composition, which preferably includes 2,5-dimethylpyrazine and/or 2,3,5-trimethylpyrazine.

However, the flavoring system of the present invention is not specifically limited; further to vanilla or chocolate flavors, alternative flavor notes include such as typically used for dairy products. As preferred examples, fruit flavors such as strawberry, raspberry, cherry or banana, as well as nut flavors such as almond, hazelnut or walnut flavors, or cookie flavors may be mentioned. The above-described aromatic aldehydes and/or pyrazines likewise blend well with these flavours.

The flavoring system may be formulated in conventional manner, using an acceptable solvent such as propylene glycol or glycerol mono-, di- or triacetate, and added to the soy food product in a suitable amount to confer the desired flavor and eliminate the off-flavors.

### Preparation of a soy-based food product

The further processing steps for the preparation of a soy-based food may be performed in accordance with conventional methods of the state of the art and generally depend on the specific type of soy-based food to be produced.

The process of the present invention is applicable to any type of conventionally soy-based food product, including soy beverages such as soymilk, spoonable food such as yogurt analogue soy products ("soy yogurt"), semi-solid or solid soy products such as tofu or soy-based analogues of dairy products such as soy cheese or soy ice cream.

For the preparation of a soy-based beverage, the soy dispersion after completion of the deglycosylation treatment may be subjected to filtration and/or homogenization if necessary, and the solid concentration and the pH value may be suitably adjusted.

In accordance with the present invention, the above-described flavoring system is incorporated. Besides, salt, sugar or other sweeteners and/or dietary supplements can be added as desired. The dietary supplements may include vitamins, such as vitamin D and B12 which are typically present in dairy products but not in soy products, mineral nutrients such as calcium and magnesium, and other micronutrients.

If necessary, the soy beverage may be pasteurized in accordance with generally known methods.

Optionally, the soy beverage may be subjected to lactic acid fermentation as described in greater detail below, to obtain a fermented soy beverage. The lactic acid fermentation also may lead to a coagulation of the soy proteins, allowing the preparation of spoonable products such as soy yogurt.

Alternatively, or in addition, the coagulation can be achieved by adding a coagulant, to produce a semi-solid or solid soy product such as soy cheese or tofu according to generally known methods.

The coagulant preferably is a salt of a polyvalent metal or an organic acid. Preferred examples of the polyvalent metal salt include calcium salts and magnesium salts, in particular calcium sulfate, magnesium sulfate, calcium chloride, magnesium chloride, or mixtures thereof. Preferred examples of the organic acid include acetic acid, lactic acid, citric acid, glucuronic acid or glucuronolactone, or mixtures thereof. In view of flavor and taste, citric acid and glucuronolactone are preferable.

### Lactic acid fermentation

Optionally, the process of the present invention may comprise a lactic acid fermentation step. The lactic acid fermentation involves the conversion of sugars into lactic acid, which reduces the pH and may lead to a coagulation of the soy proteins, allowing the preparation of fermented soy beverages such as yogurt drinks, as well as spoonable, semi-solid or solid soy products.

The lactic acid fermentation step is essentially analogous to the lactic acid fermentation of dairy products in the conventional production of yogurt or cheese, as known to the person skilled in the art, and involves the incubation of the soy dispersion with lactic acid bacteria.

The lactic acid bacteria are required to be capable to ferment the carbohydrates of the soy dispersion but are not otherwise limited. If desired, the soy dispersion may be supplemented with further carbohydrates such as sugar, which may serve as a substrate for the fermentation.

For the initiation of the fermentation, a suitable culture of lactic acid bacteria may be added to the soy dispersion directly, or a previously-prepared lactic acid fermented soy product such as soy yogurt may be used as an inoculum ("starter"). The lactic acid fermentation is carried out at an appropriate temperature depending on the microorganism (e.g., 35-40°C). The formation of lactic acid leads to the coagulation of the soy proteins and an increase of the viscosity.

The accompanying reduction of the pH value also allows to monitor the progress of the lactic acid fermentation. When the pH reaches a value of 4 to 5.5, preferably about 4.6, the lactic fermentation may be stopped by cooling. Preferably, the lactic acid bacteria remain in the fermented soy product and are not deactivated by pasteurization.

The lactic acid fermentation may be performed before, after or concurrently with the above-described deglycosylation treatment, wherein the concurrent performance is preferred. In this case, the β-glucosidase enzyme or the microorganism or inoculum with β-glucosidase activity and the lactic acid fermentation starter are added to the soy dispersion, optionally supplemented with further carbohydrates, and are incubated together.

After the fermentation treatment, the flavoring system of the present invention may be incorporated, and as salt, sugar or other sweeteners, flavors and/or dietary supplements may be added as desired, to obtain a lactic acid fermented soy-based food. Respective examples of thus-obtainable food include soy yoghurt beverages or spoonable soy yoghurt.

In case a further solidification is desired, e.g., for the preparation of soy cheese analogues, a coagulant may be added as described above.

### Examples

The present invention is illustrated by the following Examples. The Examples use commercially available soy milk as the soy dispersion.

The content of the β-glucoside genistin and the corresponding aglycone genistein was determined by HPLC in the starting material before the fermentation and in the final product, to confirm the efficacy of the deglycosylation.

In those of the Examples which further comprise lactic acid fermentation, a commercially available soy yogurt was used as the starter.

### Reference Example 1: Fermentation with Bacillus subtilis natto

Soy milk (Provamel Soya by Alpro GmbH, Düsseldorf, no sugars) was provided with 0.4% (w/w) D-(+)-Glucose anhydrous (Th. Geyer) and autoclaved at 121 °C for 30 min (SHP Steriltechnik AG, Laboklav Eco 135M). The contents of genistin and genistein was determined by HPLC.

Subsequently, 0.02 % (w/w) spores of Bacillus subtilis natto (fermentationculture.eu) were inoculated. Fermentation was then carried out in the fermenter (Eppendorf, DASGIP Bioblock) with stirring at 600 rpm and 40 °C for 24 h. Fermentation was deactivated at 90°C for 5 minutes. The contents of genistin and genistein in the thus-obtained product were again determined by HPLC. The results are shown in Table 1.

### Reference Example 2: Enzymatic fermentation/Aromase H2

At the beginning, the soy milk (Provamel Soya, no sugars) was heated in an autoclave (SHP Steriltechnik AG, Laboklav Eco 135M) at 121 °C for 30 min to eliminate potential microorganisms contained in the product. The soy milk was then adjusted to a pH of 4.8, and the contents of genistin and genistein were determined by HPLC.

Subsequently, Aromase H2 (Amano Enzyme Inc.) was applied in an amount of 1% (w/w), and the incubation was carried out in a thermoblock (Eppendorf, ThermoMixer C) at 70 °C and 1000 rpm for 24 hours. Then, the enzyme was deactivated at 90 °C for 5 minutes, and the contents of genistin and genistein in the thus-obtained product were again determined by HPLC. The results are shown in Table 1.

### Reference Example 3: Enzymatic fermentation/Naringinase

The procedure was carried out in the same way as Example 2, except that the pH of the soy milk after the heating in the autoclave was adjusted to 4.0, and Naringinase "Amano" D (Amano Enzyme Inc.) in an amount of 1% (w/w) was applied as the enzyme. The results are shown in Table 1.

### Reference Example 4: Enzymatic fermentation/β-Glucosidase from Almonds

Soy milk (Provamel Soya, no sugars) was heated in an autoclave (SHP Steriltechnik AG, Laboklav Eco 135M) at 121 °C for 30 min to eliminate potential microorganisms contained in the product. The soy milk was then adjusted to a pH of 5.0, and the contents of genistin and genistein were determined by HPLC.

Subsequently, β-Glucosidase from almonds (Merck KgaA) was added in an amount of 1% (w/w), and incubation was carried out in a thermoblock (Eppendorf, ThermoMixer C) at 37 °C and 1000 rpm for 24 hours. The enzyme was deactivated at 90 °C for 5 minutes, and the contents of genistin and genistein in the thus-obtained product were again determined by HPLC. The results are shown in Table 1.

### Reference Example 5: Incubation with Soybean Seedlings

Dried soybeans (LUVI Fermente KG) were initially soaked overnight in water (20% w/v). Thereafter, germination was achieved by 7 days incubation in an open beaker at room temperature. Thereby, the soybeans were rinsed with water once a day. The obtained soybean seedlings were ground in a milling machine (OK., Coffee Grinder OGC 1821 B).

Soy milk (Provamel Soya, no sugars) was first heated in an autoclave (SHP Steriltechnik AG, Laboklav Eco 135M) at 131 °C for 30 min to eliminate potential contained microorganisms. Then, the contents of genistin and genistein were determined by HPLC.

The ground soybean seedlings were added to the soy milk in an amount of 25% (w/v) and incubated in a thermal shaker (Infors HT, Minitron) for 24 h at 30 °C and 140 rpm.

Subsequently, the soybean debris was removed with a sieve, and the contents of genistin and genistein in the obtained product were again determined by HPLC. The results are shown in Table 1.

### Reference Example 6: Treatment with Ground Almonds

Soy milk (Provamel Soya, no sugars) was first heated in an autoclave (SHP Steriltechnik AG, Laboklav Eco 135M) at 131 °C for 30 min to eliminate potential contained microorganisms. Then, the contents of genistin and genistein were determined by HPLC.

Hulled almonds were ground in a milling machine (OK., Coffee Grinder OGC 1821 B) and added to the sterilized soy milk in an amount of 25 % w/v, and the mixture was incubated in a thermal shaker (Infors HT, Minitron) for 24 h at 37 °C and 140 rpm.

Subsequently, the mixture was sieved to remove coarse components of the almonds. The contents of genistin and genistein in the obtained product were again determined by HPLC. The results are shown in Table 1.

### Reference Example 7: Yoghurt Fermentation, no sugar

Soy milk (Provamel Soya, no sugars) was combined with 5 % soy yoghurt (Provamel, no sugars) to create a soy base, Aromase H2 (Amano) in an amount of 0.2% (v/v) was added and mixed at room temperature until the enzyme was completely dissolved. Then, the contents of genistin and genistein were determined by HPLC.

Subsequently, the mixture was heated up to 40°C, filled in glasses and closed with screw caps. The filled glasses were stored in a heat chamber at 38,5 °C until a pH of 4,6 was reached. Subsequently, the product was stored at 7°C.

The contents of genistin and genistein in the obtained product were again determined by HPLC. The results are shown in Table 1.

### Reference Example 8: Yoghurt Fermentation

Soy milk (Provamel Soya, no sugars) was combined with 5 % soy yoghurt (Provamel, no sugars) and 7.5% (w/v) sugar to create a soy base, Aromase H2 (Amano) in an amount of 0.1% (v/v) was added and mixed at room temperature until the enzyme was completely dissolved. Then, the contents of genistin and genistein were determined by HPLC.

Subsequently, the mixture was heated up to 40°C, filled in glasses and closed with screw caps. The filled glasses were stored in a heat chamber at 38,5 °C until a pH of 4,6 was reached. Subsequently, the product was stored at 7°C.

The contents of genistin and genistein in the obtained product were again determined by HPLC. The results are shown in Table 1.

### Reference Example 9: Yoghurt Fermentation

The procedure was carried out in the same way as in Example 8, except that the added amount of Aromase H2 (Amano) was reduced to 0.01% (v/v). The results are shown in Table 1.

### Reference Example 10: Yoghurt Fermentation

The procedure was carried out in the same way as in Example 8, except that the added amount of Aromase H2 (Amano) was reduced to 0.005% (v/v). The results are shown in Table 1.

### Reference Example 11: Yoghurt Fermentation

The procedure was carried out in the same way as in Example 8, except that Naringinase (Amano) D (Amano Enzyme Inc.) in an amount of 0.02% (w/w) was applied as the enzyme. The results are shown in Table 1.

### Reference Example 12: Yoghurt Fermentation

The procedure was carried out in the same way as in Example 8, except that the added amount of Naringinase (Amano) D was reduced to 0.01% (w/w). The results are shown in Table 1.

**Table 1**

| | Fermentation composition | Before treatment | | After treatment | |
|---|---|---|---|---|---|
| | | Genistin [ppm] | Genistein [ppm] | Genistin [ppm] | Genistein [ppm] |
| Ref. Ex. 1 | Provamel Soy milk sugarfree + 0.4 % Glucose + 0.02 % Natto spores | 48 | 7,2 | 47 | 23 |
| Ref. Ex. 2 | Provamel Soy milk sugarfree + 1 % Aromase H2 | 48 | 7,2 | 0 | 66 |
| Ref. Ex. 3 | Provamel Soy milk sugarfree + 1 % Naringinase "Amano" D | 48 | 7,2 | 0 | 64 |
| Ref. Ex. 4 | Provamel Soy milk sugarfree + 1 % β-Glucosidase from almonds | 48 | 7,2 | 0 | 86 |
| Ref. Ex. 5 | Provamel Soy milk sugarfree + Soybean Seedlings | 48 | 7,2 | 0 | 106 |
| Ref. Ex. 6 | Provamel Soy milk sugarfree + Ground Almonds | 48 | 7,2 | 0 | 19 |
| Ref. Ex. 7 | Yogurt Soybase, unsweetend + 0.2 % Aromase H2 | 88 | 14 | 0 | 81 |
| Ref. Ex. 8 | Yogurt Soybase + 7.5 % sugar + 0.1 % Aromase H2 | 49 | 14 | 0 | 56 |
| Ref. Ex. 9 | Yogurt Soybase + 7.5 % sugar + 0.01 % Aromase H2 | 49 | 14 | 0 | 47 |
| Ref. Ex. 10 | Yogurt Soybase + 7.5 % sugar + 0.005 % Aromase H2 H2 | 49 | 14 | 0 | 57 |
| Ref. Ex. 11 | Yogurt Soybase + 7.5 % sugar + 0.02 % Naringinase "Amano" D | 49 | 14 | 24 | 35 |
| Ref. Ex. 12 | Yogurt Soybase + 7.5 % sugar + 0.01 % Naringinase "Amano" D | 49 | 14 | 36 | 23 |

### Example 1: Vanilla Flavor

A vanilla flavor composition as shown in the following Table 2 was prepared.

**Table 2:**

| Vanilla flavor | |
|---|---|
| Vanillin | 10 |
| Aetic acid | 0.2 |
| Anisyl alcohol | 0.08 |
| Guaiacol | 0.02 |
| 4-methyl guaiacol | 0.01 |
| Indole | 0.001 |
| Anisaldehyde | 0.04 |
| Eugenol | 0.002 |
| Maltol | 0.2 |
| Isobutyric acid | 0.004 |
| Isovaleric acid | 0.004 |
| Cinnamyl alcohol | 0.005 |
| Heliotropin | 0.08 |
| Diacetyl | 0.01 |
| Propylene glycol | 89.344 |
| Total | 100 |

The vanilla flavor composition was added to the yogurt of Reference Example 7 in an amount of 0.1%. The non-flavored and the vanilla-flavored yogurt were evaluated by a panel of 10 trained panelists.

Among the panelists, 8 out of 10 preferred the flavored version and did not notice the earthy off-taste.

### Example 2: Chocolate Flavor

A chocolate flavor composition as shown in the following Table 3 was prepared:

**Table 3**

| Chocolate flavor | |
|---|---|
| Vanillin | 1,2 |
| Maltol | 0,08 |
| Isovaleraldehyde | 0,4 |
| 2,5-dimethylpyrazine | 0,04 |
| 2,3,5-trimethylpyrazine | 0,6 |
| 5-methyl-2-phenyl-2-hexenal | 0,02 |
| Ethyl phenylacetate | 0,01 |
| Isobutyl phenyl acetate | 0,03 |
| Isovaleric acid | 0,05 |
| Gamma-decalactone | 0,02 |
| Delta-decalactone | 0,01 |
| Delta-dodecalactone | 0,03 |
| Propylene glycol | 97,51 |
| Total | 100 |

The chocolate flavor composition was added to the yogurt of Reference Example 7 in an amount of 0.1%. The non-flavored and the chocolate-flavored yogurt were evaluated in the same way as described for Example 2 by a panel of 12 trained panelists.

Among the panelists, 10 out of 12 preferred the flavored version and did not notice the earthy off-taste.

## Claims

1. Process for the preparation of a soy-based food, comprising the steps of:
- preparing an aqueous soy dispersion;
- optionally heating the soy dispersion;
- subjecting the soy dispersion to a deglycosylation treatment, to deglycosylate the isoflavone β-glucosides comprised in the soy dispersion and obtain the corresponding isoflavone aglycones; and
- adding a flavor system for reducing the off-flavor caused by the deglycosylation treatment.

2. The process according to claim 1, wherein the soy dispersion is soymilk or an aqueous slurry of milled soybeans or soy flour.

3. The process according to claim 1 or 2, wherein the deglycosylation treatment comprises addition of a β-glucosidase to the soy dispersion, incubation to deglycosylate the isoflavone β-glucosides, and optionally deactivation of the β-glucosidase by heating.

4. The process according to claim 1 or 2, wherein the deglycosylation treatment comprises addition of a plant material selected from milled, pre-germinated soybeans and milled, fresh almonds to the soy dispersion and incubation to deglycosylate the isoflavone β-glucosides.

5. The process according to claim 1 or 2, wherein the deglycosylation treatment comprises addition of the microorganism Bacillus subtilis natto, and optionally glucose to the soy dispersion, incubation to deglycosylate the isoflavone β-glucosid and optionally deactivation of the microorganism.

6. The process according to any one of claims 1 to 5, further comprising a step of lactic acid fermentation treatment, which is performed before, after, or simultaneously with the deglycosylation treatment, preferably simultaneously with the deglycosylation treatment.

7. The process according to claim 6, wherein the lactic acid fermentation treatment is performed by addition of lactic acid bacteria or a lactic acid fermented soy product as an inoculum and optionally a carbohydrate source to the soy dispersion.

8. The process according to any one of claims 1 to7, further comprising a coagulation step of adding a coagulant selected from polyvalent metal salts and organic acids to the soy dispersion, preferably after the deglycosylation treatment.

9. The process according to any one of claims 1 to 8, wherein the flavoring system comprises one or more aromatic aldehydes and/or one or more pyrazines.

10. The process according to claim 9, wherein the aromatic aldehyde is anisaldehyde and/or heliotropin, and the pyrazine is 2,5-dimethylpyrazine and/or 2,3,5-trimethylpyrazine.

11. The process according according to claim 9 or 10, wherein the flavoring system is a vanilla flavor or a chocolate flavor.

12. The process according to any one of claims 1 to 11, wherein the soy-based food is selected from the group consisting of a soy beverage, preferably soy milk or a soy yogurt beverage, a spoonable soy-based food, preferably soy yoghurt, and a semi-solid or solid soy-based food.

13. A soy-based food, which is obtainable by the process of any one of claims 1 to 12.

14. A soy-based food according to claim 13 for use for the alleviation of menopause symptoms.

15. Use of a flavoring system for reducing an off-flavor of soy-based food which has been subjected to a deglycosylation treatment, wherein the flavoring system comprises one or more aromatic aldehydes and/or one or more pyrazines, and preferably one or more selected from the group consisting of anisaldehyde, heliotropin, 2,5-dimethylpyrazine and 2,3,5-trimethylpyrazine.
